# EUROPEAN PATENT APPLICATION

(11) **EP 4 585 051 A1**
(43) Date of publication of application: **16.07.2025**
(21) Application number: 23852352.6
(22) Date of filing: 24.07.2023
(51) Int. Cl.: A23L 27/00, A23L 2/00, A23L 2/52, A23L 5/00, A23L 23/10

(54) **SALTINESS ENHANCING AGENT, SALTY SEASONING, FOOD OR DRINK, METHOD FOR PRODUCING FOOD OR DRINK, AND METHOD FOR REDUCING SALT IN FOOD OR DRINK**

(30) Priority: 09.08.2022 JP 2022127114
(71) Applicant: NISSIN FOODS HOLDINGS CO., LTD., Yodogawa-ku Osaka-shi, Osaka 532-8524 (JP); The University of Tokyo, Bunkyo-ku, Tokyo 113-8654 (JP)
(72) Inventor: YAMASHITA, Haruyuki, Tokyo 113-8654 (JP); ASAKURA, Tomiko, Tokyo 113-8654 (JP); ABE, Keiko, Tokyo 113-8654 (JP); KASAHARA, Yoichi, Osaka 532-8524 (JP)
(74) Representative: Marks & Clerk LLP
(86) International application number: PCT/JP2023/026999
(87) International publication number: WO 2024/034376

(57) **Abstract**

An object of the present invention is to provide: a salty taste enhancer for enhancing a salty taste derived from sodium chloride; a salty taste seasoning that can be used as a substitute for common salt; a food with an enhanced salty taste; a method for producing foods; and a method for reducing the salt content of foods. The present invention is characterized in that the salty taste of sodium chloride is enhanced by coexistence with sodium hydrogen carbonate and ammonium chloride or with sodium carbonate and ammonium chloride. The ratio of the total weight of the sodium hydrogen carbonate or the sodium carbonate and the ammonium chloride to the weight of the sodium chloride is preferably from 0.1 to 75.0.

## Description

### Technical Field

The present invention relates to a salty taste enhancer that enhances the salty taste of sodium chloride, a salty taste seasoning, a food with an enhanced salty taste, a method for producing foods, and a method for reducing the salt content of foods.

### Background Art

Recent years have seen a strong need to reduce the intake of common salt (sodium) for purposes such as preventing hypertension or hypertension-related complications. However, a reduction in the amount of common salt in a food unfortunately results in the food being insipid. There is therefore a demand for the replacement of common salt by a so-called salt substitute which has a salty taste and the use of a salty taste enhancer for salty taste enhancement.

The most commonly used salt substitute is potassium chloride. However, potassium chloride has peculiar acrid and bitter tastes in addition to a salty taste and is far from satisfactory as a substitute for common salt. A possible solution to this problem may be to mask the bitter taste of potassium chloride or enhance the salty taste of sodium chloride and create a taste similar to that of common salt.

Patent Literature 1 is an example of prior art documents related to a salty taste enhancer that enhances the salty taste of sodium chloride and a salty taste enhancing method. However, Patent Literature 1 is premised on the use of L-proline, and there is room for investigation of another way of enhancing a salty taste derived from sodium chloride without the use of L-proline.

### Citation List

### Patent Literature

PTL 1: Japanese Laid-Open Patent Application Publication No. 2016-158532

### Summary of Invention

### Technical Problem

An object of the present invention is to provide: a salty taste enhancer for enhancing a salty taste derived from sodium chloride; a salty taste seasoning that can be used as a substitute for common salt; a food with an enhanced salty taste; a method for producing foods; and a method for reducing the salt content of foods. The present application is a patent application related to the result of a commissioned research entitled "Creation and Examination of Salty Taste Sensing Technology Aimed At Development of Salty Taste Enhancing Substance with Superior Taste Properties" which was conducted as a part of the research results transfer project of the Japan Science and Technology Agency in fiscal 2021.

### Solution to Problem

As a result of intensive studies, the present inventors have found that the salty taste of a food containing sodium chloride can be enhanced by incorporating sodium hydrogen carbonate or sodium carbonate and ammonium chloride into the food. Based on this finding, the inventors have completed the present invention.

Specifically, the present invention relates to a salty taste enhancer containing sodium hydrogen carbonate or sodium carbonate, and ammonium chloride.

The present invention also relates to a salty taste seasoning containing:
sodium chloride;
sodium hydrogen carbonate or sodium carbonate; and
ammonium chloride.

The salty taste enhancer or the salty taste seasoning is particularly preferred for use in a liquid food. The salty taste enhancer or the salty taste seasoning may be used in a solid or fluid food.

Preferably, the salty taste enhancer of the present invention is added to a food, and the ratio of the weight of the added salty taste enhancer to the weight of sodium chloride in the food is from 0.1 to 75.0.

Preferably, in the salty taste seasoning of the present invention, the ratio of the total weight of the sodium hydrogen carbonate or the sodium carbonate and the ammonium chloride to the weight of the sodium chloride is from 0.1 to 75.0.

Preferably, the salty taste enhancer or the salty taste seasoning of the present invention is a liquid.

The present invention also relates to a food containing sodium chloride, sodium hydrogen carbonate or sodium carbonate, and ammonium chloride.

Preferably, in the food, the ratio of the total weight of the sodium hydrogen carbonate or the sodium carbonate and the ammonium chloride to the weight of the sodium chloride is from 0.1 to 75.0.

The present invention also relates to a method for producing foods, including the step of producing a food containing sodium chloride, wherein the step of producing the food includes adding sodium hydrogen carbonate or sodium carbonate, and ammonium chloride to the food.

Preferably, in the production method, the ratio of the total weight of the sodium hydrogen carbonate or the sodium carbonate and the ammonium chloride added to the food to the weight of the sodium chloride in the food is from 0.1 to 75.0.

The present invention also relates to a method for reducing the salt content of foods, including, when consuming a food containing sodium chloride, incorporating sodium hydrogen carbonate or sodium carbonate, and ammonium chloride into the food.

Preferably, in the salt content-reducing method, the ratio of the total weight of the sodium hydrogen carbonate or the sodium carbonate and the ammonium chloride incorporated into the food to the weight of the sodium chloride in the food is from 0.1 to 75.0.

### Description of Embodiments

Hereinafter, the present invention will be described in detail.

### o Sodium hydrogen carbonate

Sodium hydrogen carbonate is also referred to as baking soda, bicarbonate of soda, sodium bicarbonate, NaHCO₃, or sodium and approved for use as a food additive in foods.

### ∘ Sodium carbonate

Sodium carbonate is also referred to as soda ash, carbonic acid disodium salt, washing soda, Na carbonate, carbonate of soda, sal soda, or Na₂CO₃ and approved for use as a food additive in foods.

### ∘ Ammonium chloride

Ammonium chloride is also referred to as chloride of ammonium, ammonium muriate, or NH₄Cl and approved for use as a food additive in foods.

### ∘ Sodium chloride

Sodium chloride is also referred to as common salt, chlorosodium, chloride of sodium, Na chloride, or NaCl. Sodium chloride is often simply referred to as "salt". Sodium chloride contains minerals essential for humans. However, in recent years, excess intake of sodium chloride has been pointed out as a cause for disorders such as hypertension. There is therefore an increasing need to reduce the intake of sodium chloride.

### o Ratio of total weight of sodium hydrogen carbonate or sodium carbonate and ammonium chloride to weight of sodium chloride in salty taste seasoning

In the present invention, the salty taste enhancing effect on a food is small if the total content of sodium hydrogen carbonate or sodium carbonate and ammonium chloride in the food is too low relative to the content of sodium chloride in the food. Conversely, an extremely high total content of sodium hydrogen carbonate or sodium carbonate and ammonium chloride leads to the food having a strange taste. Thus, the ratio of the total weight of sodium hydrogen carbonate or sodium carbonate and ammonium chloride to the weight of sodium chloride in the salty taste seasoning is preferably from 0.1 to 75.0, more preferably from 0.5 to 5.0, and even more preferably from 0.6 to 3.0.

### -Salty taste enhancer-

The salty taste enhancer of the present invention refers to a formulation used in a food to enhance the salty taste of the food and may be a formulation in the form of a solution or a powder. That is, the term "enhance" as used to describe the salty taste enhancer of the present invention is intended to mean enhancing the salty taste inherently present in a food in which the salty taste enhancer is used.

### -Salty taste seasoning-

The salty taste seasoning of the present invention refers to a formulation that is applied as a seasoning to a food in the same manner as table salt in order to impart a salty taste to the food, that has a more salty taste than table salt, and that can impart the same level of salty taste to the food as table salt when used in a smaller amount than table salt. The salty taste seasoning may be a formulation in the form of a solution or a powder.

The salty taste enhancer or the salty taste seasoning of the present invention may contain optional ingredients such as other saline components, water, various fats and oils, flavors, spices, colorants, and seasonings.

The salty taste enhancer or the salty taste seasoning is not limited to taking a particular form and may be a liquid, a powder, or a tablet. The salty taste enhancer may but need not be enclosed in a given form of container. The salty taste enhancer only has to be present as a material that contains at least sodium hydrogen carbonate and ammonium chloride or at least sodium carbonate and ammonium chloride and that is used to enhance the salty taste of a food at the time of production or consumption of the food (the material may be any kind of foodstuff to be added such as that prepared as a solution, a powder, or a tablet). Any form of formulation is considered to fall within the scope of the salty taste enhancer as defined in the present invention as long as the use of the formulation involves adding or mixing sodium hydrogen carbonate and ammonium chloride or sodium carbonate and ammonium chloride into a food at the time of production or consumption of the food.

The salty taste seasoning of the present invention may be, for example, a liquid or a powder used for addition to a food (such as a dish or soup) to be consumed.

### -Food-

The food as defined in the present invention may be any form of food that can be consumed, and examples of the food include various kinds of dishes and drinks consumed in households or restaurants. For example, various kinds of dishes such as Japanese dishes, Western dishes, and Chinese dishes fall within the scope of the food as defined in the present invention, and garnishes such as pickles also fall within the scope of the food as defined in the present invention. A variety of processed foods produced in diverse food industries also fall within the scope of the food as defined in the present invention. Examples of the processed foods include various instant foods such as instant noodles and instant cup rices and retort foods such as retort curries. The present invention is suitably applicable, in particular, to soups of instant noodle products (instant cup noodles or packaged noodles). The salty taste enhancer or the salty taste seasoning of the present invention may be contained in a liquid seasoning such as soy sauce or any other sauce or may be added to an instant noodle product at the time of consumption of the instant noodle product.

The present invention is also applicable to confectionery products such as snacks. For example, the present invention is suitably applicable to salt-containing confectionery products such as potato chips.

The food as defined in the present invention may be a seasoning or an additive used for preparation or processing of foods. Specifically, seasonings such as soy sauce or other sauces, and solid roux or concentrated packs used to prepare curries or stews in households, are included in the scope of the food as defined in the present invention. Seasonings such as soy sauce, other sauces, and dressings are also included in the scope of the food as defined in the present invention.

### -Common salt concentration of food-

The common salt concentration (sodium chloride concentration) of a food in the present invention is not limited to a particular range. Preferably, the salty taste enhancer or the salty taste seasoning of the present invention is added to a food such that the common salt concentration of the food is about from 0.2 to about 1.0% by weight.

### -pH-

In the case where a food to which the salty taste enhancer or the salty taste seasoning of the present invention is added is a liquid, the pH of the food is not limited to a particular range but is preferably from about 6 to about 8. In production of a food, the pH of the food may be adjusted as necessary. For example, when the salty taste enhancer or the salty taste seasoning of the present invention is added to a food, an acid or an alkali may also be added to adjust the pH of the food.

Hereinafter, embodiments of the present invention will be specifically described. The present invention is not limited by the following description.

### [Test Example 1]

An amount of 3.53 g of sodium chloride (NaCl), 0.98 g of sodium hydrogen carbonate (baking soda, NaHCO₃), and 2.49 g of ammonium chloride (NH₄Cl) were weighed into a beaker and transferred into a measuring flask, to which purified water was added to a total volume of 1000 mL. All of the reagents used are special-grade reagents. The weights of sodium chloride, sodium hydrogen carbonate, and ammonium chloride contained in 1000 mL (1 liter) of the prepared solution are listed in Table 1.

**[Table 1]**

| Substance name | Weight content in 1 liter |
|---|---|
| Sodium chloride | 3.53 g |
| Sodium hydrogen carbonate | 0.98 g |
| Ammonium chloride | 2.49 g |

The sodium concentration of the prepared solution of Test Example 1 is 72 mM. Aqueous sodium chloride solutions having a sodium chloride concentration of 0 to 1.0 (w/v)% were prepared, and the salty taste levels of the aqueous sodium chloride solutions were ranked from "0" to "10" as shown in Table 2.

**[Table 2]**

| NaCl concentration (w/v%) | Na molar concentration (mM) | Salty taste level |
|---|---|---|
| 0 | 0 | 0 |
| 0.1 | 17 | 1 |
| 0.2 | 34 | 2 |
| 0.3 | 51 | 3 |
| 0.4 | 68 | 4 |
| 0.5 | 86 | 5 |
| 0.6 | 103 | 6 |
| 0.7 | 120 | 7 |
| 0.8 | 137 | 8 |
| 0.9 | 154 | 9 |
| 1 | 171 | 10 |

### -Sensory evaluation of salty taste-

The salty taste of the prepared solution was evaluated by sensory testing involving five trained soup experts as panelists. Specifically, each of the five panelists tasted the prepared solution and determined to which of the salty taste levels listed in Table 2 the salty taste level of the prepared solution corresponded, and the average of the determined salty taste levels was rounded off to the nearest integer.

The result was that the salty taste level of the prepared solution of Test Example 1 was "9"; that is, the prepared solution of Test Example 1 was found to have the same level of salty taste as a 0.9 w/v% aqueous sodium chloride solution. It was therefore confirmed that the prepared solution of Test Example 1 was an aqueous solution having a Na concentration of 72 mM and having a salty taste corresponding to that of an aqueous sodium chloride solution having a Na concentration of 154 mM. This result demonstrates that when an aqueous solution containing sodium chloride, sodium hydrogen carbonate, and ammonium chloride is prepared so as to have the same salty taste level as an aqueous solution containing only sodium chloride, the sodium concentration can be significantly lower in the former aqueous solution than in the latter.

### [Test Example 2]

Compositions different from that shown in Test Example 1 were examined; specifically, aqueous solutions having a sodium concentration of 72 mM like the aqueous solution of Test Example 1 but containing varying proportions of sodium hydrogen carbonate and ammonium chloride were subjected to evaluation.

### -Sensory evaluation of strange taste-

An increase in the content of sodium hydrogen carbonate or ammonium chloride led to the aqueous solutions having a strange taste. Sensory evaluation was conducted also for the strange taste. The term "strange taste" as used herein refers to any taste that is other than salty tastes and that cannot be found in an aqueous solution containing only sodium chloride, and examples of the strange taste include a bitter taste, an acrid taste, and a bad aftertaste. In the strange taste sensory evaluation, as in the salty taste sensory evaluation, sensory testing involving five trained soup experts as panelists was performed, and the average of the scores given by the panelists was rounded off to the nearest integer. The strange taste level was graded on a five-point scale using the following scores 0 to 4: "0: the taste is different from any salty taste"; "1: there is a somewhat strange taste (acceptable level)"; "2: there is a slight strange taste"; "3: there is a very slight strange taste"; and "4: there is no strange taste" (0: Poor ↔ 4: Good).

The weights of sodium chloride, sodium hydrogen carbonate, and ammonium chloride contained in 1000 mL of each of the prepared solutions of different test categories and the results of sensory evaluation in the different test categories are listed in Table 3.

**[Table 3]**

| Test category | | 1 | 2 | 3 | 4 | 5 | 6 | 7 | 8 |
|---|---|---|---|---|---|---|---|---|---|
| Sodium chloride | | 2.09 | 2.39 | 2.70 | 2.92 | 3.25 | 3.49 | 3.77 | 4.04 |
| Sodium hydrogen carbonate | | 3.00 | 2.58 | 2.16 | 1.80 | 1.36 | 0.98 | 0.58 | 0.18 |
| Ammonium chloride | | 1.91 | 2.03 | 2.14 | 2.29 | 2.40 | 2.53 | 2.65 | 2.78 |
| (Sodium hydrogen carbonate + ammonium chloride)/sodium chloride | | 2.35 | 1.93 | 1.59 | 1.40 | 1.16 | 1.01 | 0.86 | 0.73 |
| Sensory evaluation | Salty taste level | 6 | 7 | 7 | 8 | 8 | 9 | 9 | 9 |
| | Strange taste | 3 | 3 | 3 | 3 | 4 | 4 | 4 | 3 |

The prepared solution of every test category showed a salty taste level of 6 or more (corresponding to a Na concentration of 103 mM or more). It was therefore confirmed that the prepared solutions of the test categories 1 to 7, which had a Na concentration of 72 mM, gave a salty taste corresponding to that of an aqueous sodium chloride solution having a Na concentration of 103 mM or more.

### [Test Example 3]

In Test Example 3, prepared solutions with a sodium concentration of 60 mM were tested unlike in Test Examples 1 and 2 where the Na concentration of the prepared solutions examined was 72 mM.

The weights of sodium chloride, sodium hydrogen carbonate, and ammonium chloride contained in 1000 mL of each of the prepared solutions of different test categories and the results of sensory evaluation in the different test categories are listed in Table 4.

**[Table 4]**

| Test category | | 1 | 2 | 3 | 4 | 5 | 6 | 7 | 8 | 9 | 10 | 11 |
|---|---|---|---|---|---|---|---|---|---|---|---|---|
| Sodium chloride | | 0.87 | 1.17 | 1.40 | 1.62 | 1.82 | 2.06 | 2.29 | 2.60 | 2.80 | 3.12 | 3.35 |
| Sodium hydrogen carbonate | | 3.75 | 3.36 | 3.03 | 2.69 | 2.38 | 2.05 | 1.71 | 1.32 | 1.00 | 0.59 | 0.25 |
| Ammonium chloride | | 2.39 | 2.47 | 2.57 | 2.69 | 2.80 | 2.90 | 3.00 | 3.08 | 3.20 | 3.29 | 3.39 |
| (Sodium hydrogen carbonate + ammonium chloride)/sodium chloride | | 7.06 | 4.98 | 4.00 | 3.32 | 2.85 | 2.40 | 2.06 | 1.69 | 1.50 | 1.24 | 1.09 |
| Sensory evaluation | Salty taste level | 5 | 5 | 5 | 6 | 6 | 6 | 7 | 7 | 8 | 9 | 9 |
| | Strange taste | 2 | 2 | 3 | 3 | 3 | 4 | 4 | 3 | 3 | 3 | 3 |

The prepared solution of every test category showed a salty taste level of 5 or more (corresponding to a Na concentration of 86 mM or more). It was therefore confirmed that the prepared solutions of the test categories 1 to 11, which had a Na concentration of 60 mM, gave a salty taste corresponding to that of an aqueous sodium chloride solution having a Na concentration of 86 mM or more.

### [Test Example 4]

In Test Example 4, prepared solutions were tested in the same manner as in Test Example 3, except that the Na concentration of the prepared solutions was 48 mM.

The weights of sodium chloride, sodium hydrogen carbonate, and ammonium chloride contained in 1000 mL of each of the prepared solutions of different test categories and the results of sensory evaluation in the different test categories are listed in Table 5.

**[Table 5]**

| Test category | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Sodium chloride | | 0.11 | 0.28 | 0.49 | 0.62 | 0.82 | 1.08 | 1.25 | 1.48 | 1.65 | 1.85 | 2.01 | 2.20 | 2.42 | 2.63 |
| Sodium hydrogen carbonate | | 3.89 | 3.63 | 3.34 | 3.12 | 2.84 | 2.51 | 2.25 | 1.94 | 1.69 | 1.40 | 1.16 | 0.88 | 0.58 | 0.29 |
| Ammonium chloride | | 3.00 | 3.09 | 3.16 | 3.26 | 3.34 | 3.41 | 3.49 | 3.58 | 3.66 | 3.75 | 3.83 | 3.92 | 3.99 | 4.08 |
| (Sodium hydrogen carbonate + ammonium chloride)/sodium chloride | | 62.64 | 24.00 | 13.27 | 10.29 | 7.54 | 5.48 | 4.59 | 3.73 | 3.24 | 2.78 | 2.48 | 2.18 | 1.89 | 1.66 |
| Sensory evaluation | Salty taste level | 5 | 5 | 6 | 6 | 6 | 7 | 7 | 8 | 8 | 8 | 9 | 8 | 9 | 9 |
| | Strange taste | 2 | 2 | 2 | 3 | 3 | 3 | 2 | 2 | 2 | 2 | 2 | 2 | 2 | 2 |

The prepared solution of every test category showed a salty taste level of 5 or more (corresponding to a Na concentration of 86 mM or more). It was therefore confirmed that the prepared solutions of the test categories 1 to 14, which had a Na concentration of 60 mM, gave a salty taste corresponding to that of an aqueous sodium chloride solution having a Na concentration of 86 mM or more. However, in some of the test categories, the prepared solutions gave a strange taste the level of which was scored as "2" in the sensory evaluation.

### [Test Example 5]

In Test Example 5, prepared solutions were tested in the same manner as in Test Example 3, except that the Na concentration of the prepared solutions was 36 mM.

The weights of sodium chloride, sodium hydrogen carbonate, and ammonium chloride contained in 1000 mL of each of the prepared solutions of different test categories and the results of sensory evaluation in the different test categories are listed in Table 6.

**[Table 6]**

| Test category | | 1 | 2 | 3 | 4 | 5 | 6 | 7 | 8 | 9 |
|---|---|---|---|---|---|---|---|---|---|---|
| Sodium chloride | | 0.18 | 0.39 | 0.55 | 0.67 | 0.81 | 0.93 | 1.01 | 1.09 | 1.25 |
| Sodium hydrogen carbonate | | 2.76 | 2.49 | 2.27 | 2.09 | 1.89 | 1.70 | 1.55 | 1.41 | 1.19 |
| Ammonium chloride | | 4.06 | 4.12 | 4.18 | 4.24 | 4.30 | 4.37 | 4.43 | 4.50 | 4.56 |
| (Sodium hydrogen carbonate + ammonium chloride)/sodium chloride | | 37.89 | 16.95 | 11.73 | 9.45 | 7.64 | 6.53 | 5.92 | 5.42 | 4.60 |
| Sensory evaluation | Salty taste level | 5 | 5 | 5 | 6 | 6 | 6 | 7 | 7 | 7 |
| | Strange taste | 1 | 1 | 1 | 2 | 2 | 2 | 2 | 2 | 2 |

In every test category, the salty taste level was 5 or more (corresponding to a Na concentration of 86 mM or more). It was therefore confirmed that the prepared solutions of the test categories 1 to 9, which had a Na concentration of 36 mM, gave a salty taste corresponding to that of an aqueous sodium chloride solution having a Na concentration of 86 mM or more. However, in all of the test categories, the prepared solutions gave a strange taste the level of which was scored as "1" or "2" in the sensory evaluation.

### [Test Example 6]

In Test Example 6, prepared solutions were tested in the same manner as in Test Example 3, except that the Na concentration of the prepared solutions was 84 mM.

The weights of sodium chloride, sodium hydrogen carbonate, and ammonium chloride contained in 1000 mL of each of the prepared solutions of different test categories and the results of sensory evaluation in the different test categories are listed in Table 7.

**[Table 7]**

| Test category | | 1 | 2 | 3 | 4 | 5 | 6 |
|---|---|---|---|---|---|---|---|
| Sodium chloride | | 3.40 | 3.62 | 3.95 | 4.36 | 4.66 | 4.88 |
| Sodium hydrogen carbonate | | 2.20 | 1.79 | 1.32 | 0.78 | 0.33 | 0.05 |
| Ammonium chloride | | 1.40 | 1.58 | 1.73 | 1.86 | 2.00 | 2.07 |
| (Sodium hydrogen carbonate + ammonium chloride)/sodium chloride | | 1.06 | 0.93 | 0.77 | 0.61 | 0.50 | 0.43 |
| Sensory evaluation | Salty taste level | 6 | 6 | 6 | 7 | 7 | 7 |
| | Strange taste | 4 | 4 | 4 | 4 | 3 | 3 |

In every test category, the salty taste level was 6 or more (corresponding to a Na concentration of 103 mM or more). It was therefore confirmed that the prepared solutions of the test categories 1 to 6, which had a Na concentration of 84 mM, gave a salty taste corresponding to that of an aqueous sodium chloride solution having a Na concentration of 103 mM or more.

### [Test Example 7]

In Test Example 7, prepared solutions were tested in the same manner as in Test Example 3, except that the Na concentration of the prepared solutions was 96 mM.

The weights of sodium chloride, sodium hydrogen carbonate, and ammonium chloride contained in 1000 mL of each of the prepared solutions of different test categories and the results of sensory evaluation in the different test categories are listed in Table 8.

**[Table 8]**

| Test category | | 1 | 2 | 3 |
|---|---|---|---|---|
| Sodium chloride | | 4.52 | 4.98 | 5.32 |
| Sodium hydrogen carbonate | | 1.51 | 0.93 | 0.40 |
| Ammonium chloride | | 0.96 | 1.10 | 1.28 |
| (Sodium hydrogen carbonate + ammonium chloride)/sodium chloride | | 0.55 | 0.41 | 0.32 |
| Sensory evaluation | Salty taste level | 6 | 6 | 6 |
| | Strange taste | 4 | 4 | 4 |

In every test category, the salty taste level was 6 or more (corresponding to a Na concentration of 103 mM or more). It was therefore confirmed that the prepared solutions of the test categories 1 to 3, which had a Na concentration of 84 mM, gave a salty taste corresponding to that of an aqueous sodium chloride solution having a Na concentration of 103 mM or more.

### [Test Example 8]

In Test Example 8, prepared solutions were tested in the same manner as in Test Example 3, except that the Na concentration of the prepared solutions was 108 mM.

The weights of sodium chloride, sodium hydrogen carbonate, and ammonium chloride contained in 1000 mL of each of the prepared solutions of different test categories and the results of sensory evaluation in the different test categories are listed in Table 9.

**[Table 9]**

| Test category | | 1 | 2 | 3 |
|---|---|---|---|---|
| Sodium chloride | | 5.75 | 6.25 | 6.28 |
| Sodium hydrogen carbonate | | 0.76 | 0.09 | 0.01 |
| Ammonium chloride | | 0.49 | 0.66 | 0.72 |
| (Sodium hydrogen carbonate + ammonium chloride)/sodium chloride | | 0.22 | 0.12 | 0.12 |
| Sensory evaluation | Salty taste level | 7 | 7 | 7 |
| | Strange taste | 4 | 4 | 3 |

In every test category, the salty taste level was 7 or more (corresponding to a Na concentration of 120 mM or more). It was therefore confirmed that the prepared solutions of the test categories 1 to 3, which had a Na concentration of 108 mM, gave a salty taste corresponding to that of an aqueous sodium chloride solution having a Na concentration of 120 mM or more.

### [Test Example 9]

In Test Example 9, sodium carbonate was used unlike in Test Examples 1 to 8 where sodium hydrogen carbonate was used, and prepared solutions of different test categories were subjected to sensory evaluation in the same manner as in Test Example 2, except for the use of sodium carbonate instead of sodium hydrogen carbonate.

The weights of sodium chloride, sodium carbonate, and ammonium chloride contained in 1000 mL of each of the prepared solutions of the different test categories and the results of sensory evaluation in the different test categories are listed in Table 10.

**[Table 10]**

| Test category | | 1 | 2 | 3 | 4 | 5 | 6 | 7 | 8 |
|---|---|---|---|---|---|---|---|---|---|
| Sodium chloride | | 0.78 | 1.22 | 1.67 | 2.18 | 2.58 | 3.21 | 3.70 | 4.01 |
| Sodium carbonate | | 3.10 | 2.68 | 2.27 | 1.83 | 1.44 | 0.92 | 0.48 | 0.16 |
| Ammonium chloride | | 3.13 | 3.10 | 3.06 | 2.99 | 2.97 | 2.86 | 2.82 | 2.83 |
| (Sodium carbonate + ammonium chloride)/sodium chloride | | 7.99 | 4.74 | 3.19 | 2.21 | 1.71 | 1.18 | 0.89 | 0.75 |
| Sensory evaluation | Salty taste level | 6 | 7 | 7 | 7 | 8 | 8 | 8 | 8 |
| | Strange taste | 1 | 1 | 1 | 2 | 3 | 4 | 4 | 3 |

In every test category, the salty taste level was 6 or more (corresponding to a Na concentration of 103 mM or more). It was therefore confirmed that the prepared solutions of the test categories 1 to 8, which had a Na concentration of 72 mM, gave a salty taste corresponding to that of an aqueous sodium chloride solution having a Na concentration of 103 mM or more. In the test categories 1 to 3, the strange taste was somewhat strong and scored as "1" in the sensory evaluation.

### [Test Example 10]

The salt content-reducing effect of the salty taste enhancer of the present invention in an instant noodle product (the actual effect of the salty taste enhancer used in an instant cup noodle product) was examined as described below.

### [Comparative Example]

A cup noodle product (Japanese soba) was used to investigate the effect of the salty taste enhancer of the present invention. Japanese soba noodles prepared from flour containing buckwheat flour in part were boiled, then cut and fried to obtain a soba noodle block (72 g) for use as an instant noodle product. A powdered soup for Japanese soba which contained 4 g of common salt was prepared as a powered soup for use with the soba noodle block (the powdered soup had a weight of 12 g and contained none of sodium hydrogen carbonate, sodium carbonate, and ammonium chloride).

The soba noodle block and the powdered soup were placed into a cup-shaped container made of polypropylene, and 420 mL of hot water was poured into the container, over the top of which a lid was placed for 3 minutes. After that, the contents of the container were thoroughly stirred with chopsticks to complete the cooking. Subsequently, sensory evaluation was conducted in which five trained experts as panelists tasted the cooked instant Japanese soba and scored the salty taste level of the soup as in Test Examples 2 to 9.

### [Example]

A powdered soup for Japanese soba was prepared in the same manner as in Comparative Example, except that a salty taste seasoning containing 2 g of common salt, 0.55 g of sodium hydrogen carbonate, and 1.41 g of ammonium chloride was used instead of 4 g of common salt. The powdered soup was used to cook instant Japanese soba as in Comparative Example. As in Comparative Example, sensory evaluation was conducted in which five panelists tasted the instant Japanese soba and scored the salty taste level of the soup.

### -Results of sensory evaluation-

All of the five panelists determined that there was no difference in salty taste between the soup of Comparative Example and the soup of Example. In addition, all of the five panelists found no strange taste in the soup of Example and determined that the soup of Example had a similar taste to the soup of Comparative Example.

The amount of sodium contained in 0.55 g of sodium hydrogen carbonate is calculated as 0.55 × 23/84 = 0.15 g, and the amount of sodium chloride containing 0.15 g of sodium is calculated as 0.15 × 58.4/23 = 0.38 g. The amount of sodium chloride in the soup of Example corresponds to 2 + 0.38 = 2.38 g; thus, the salt content of the soup of Example was successfully reduced by (4 - 2.38)/4 × 100 = 40.5% as compared to that of the soup of Comparative Example which contained 4 g of sodium chloride.

## Claims

1. A salty taste enhancer comprising sodium hydrogen carbonate or sodium carbonate, and ammonium chloride.

2. A salty taste seasoning comprising:
sodium chloride;
sodium hydrogen carbonate or sodium carbonate; and
ammonium chloride.

3. The salty taste enhancer according to claim 1, wherein
the salty taste enhancer is added to a food, and
a ratio of a weight of the added salty taste enhancer to a weight of sodium chloride in the food is from 0.1 to 75.0.

4. The salty taste seasoning according to claim 2, wherein a ratio of a total weight of the sodium hydrogen carbonate or the sodium carbonate and the ammonium chloride to a weight of the sodium chloride in the salty taste seasoning is from 0.1 to 75.0.

5. The salty taste enhancer according to claim 1, wherein the salty taste enhancer is a liquid.

6. The salty taste seasoning according to claim 2, wherein the salty taste seasoning is a liquid.

7. A food comprising sodium chloride, sodium hydrogen carbonate or sodium carbonate, and ammonium chloride.

8. The food according to claim 7, wherein the food is a liquid.

9. The food according to claim 7 or 8, wherein a ratio of a total weight of the sodium hydrogen carbonate or the sodium carbonate and the ammonium chloride to a weight of the sodium chloride is from 0.1 to 75.0.

10. A method for producing foods, comprising the step of producing a food containing sodium chloride, wherein the step of producing the food comprises adding sodium hydrogen carbonate or sodium carbonate, and ammonium chloride to the food.

11. The method according to claim 10, wherein a ratio of a total weight of the sodium hydrogen carbonate or the sodium carbonate and the ammonium chloride added to the food to a weight of the sodium chloride in the food is from 0.1 to 75.0.

12. A method for reducing the salt content of foods, comprising, when consuming a food containing sodium chloride, incorporating sodium hydrogen carbonate or sodium carbonate, and ammonium chloride into the food.

13. The method according to claim 12, wherein a ratio of a total weight of the sodium hydrogen carbonate or the sodium carbonate and the ammonium chloride incorporated into the food to a weight of the sodium chloride in the food is from 0.1 to 75.0.
